# EUROPEAN PATENT APPLICATION

(11) **EP 3 133 139 A1**
(43) Date of publication of application: **22.02.2017**
(21) Application number: 15780192.9
(22) Date of filing: 10.04.2015
(51) Int. Cl.: C10J 3/46

(54) **COAL CO-GASIFICATION METHOD**

(30) Priority: 15.04.2014 CN 201410150394
(71) Applicant: Enn Coal Gasification Mining Co. Ltd., LangFang, Hebei 065001 (CN)
(72) Inventor: CHEN, Feng, Langfang Hebei 065001 (CN); PAN, Xia, Langfang Hebei 065001 (CN)
(74) Representative: Bittner, Thomas L.
(86) International application number: PCT/CN2015/076344
(87) International publication number: WO 2015/158222

(57) **Abstract**

A coal co-gasification method, comprising the following steps: 1, fuel and a first pressurised oxygen-containing gas are injected into a gasifier, and the fuel is ignited so as to increase the temperature inside the gasifier; 2, when the temperature increase reaches a temperature capable of igniting coal-water slurry to be injected, injection of the fuel and the first pressurised oxygen-containing gas is stopped, and the coal-water slurry and a second pressurised oxygen-containing gas are injected into the gasifier so as to perform coal-water slurry gasification; 3, once the coal-water slurry gasification has stabilised, a third pressurised oxygen-containing gas and carbon dioxide carrying powdered coal are injected into the gasifier to perform co-gasification. The method operates stably, and overcomes cumbersome and time-consuming adjustment steps in the prior art.

## Description

The application claims the priority of Chinese Patent Application No. 201410150394.9, filed on April 15, 2014 and titled "Method for Co-gasification of Coal", the disclosure of which is incorporated herein in its entirety by reference.

### Field of Technology

The present invention relates to the field of coal gasification, and in particular to a method for co-gasification of coal.

### Background

Coal gasification is a process in which, at a certain temperature and pressure, organic matter in the coal is caused to chemically react with a gasification agent (for example, oxygen) so that solid coal is converted into a combustible gas containing CO, H₂, CH₄, etc. and an incombustible gas containing CO₂, N₂, etc. Common coal gasification technologies at present mainly include: coal water slurry gasification technology, pulverized coal gasification technology, biomass gasification technology, and gasification technology for multiple slurries currently in progress of technological improvement. Wherein, methods for gasification of raw gasification material in different phases are obviously different. With regard to co-gasification of raw material of different phases, for example, co-gasification of pulverized coal and coal water slurry, the gasification method is even more complicated and includes specific steps obviously different from those for gasification of coal water slurry only, gasification of pulverized coal only and gasification of multiple slurries only.

CN101760244A disclosed a three-phase multi-material pressurized coal gasification device and a process thereof. The gasification process includes: broken feed coal, water and annexing agent are grinded into coal water slurry, and the coal water slurry enters a combustion chamber from a mixing nozzle; the broken dry pulverized coal is transported by a high-pressure carbon dioxide gas to enter the combustion chamber from the mixing nozzle; and then high-pressure pressurized oxygen is injected into the combustion chamber. At a high temperature, the high-pressure pressurized oxygen chemically reacts with the coal water slurry and the pulverized coal to generate a synthesis gas (an industrial coal gas) mainly composed of carbon oxide and hydrogen. With regard to this method in which raw material of multiple phases is added into a gasifier simultaneously for mixed combustion, instability is prone to occur during the combustion. As a result, components of the synthesis gas might be unstable, or the synthesis gas is relatively low in quality. When the instability mentioned above occurs, an attempt to adjust a plurality of kinds of raw material one by one is required to obtain a relatively stable co-gasification, the adjustment being complicated, time-consuming and highly difficult.

### Summary of the Invention

With regard to problems existing in related technologies, an objective of the present invention is to provide a method for co-gasification of coal with stable operation.

For this purpose, the present invention provides a method for co-gasification of coal, including the following steps: step 1: injecting fuel and a first pressurized oxygen-containing gas into a gasifier, and igniting the fuel for temperature rise inside the gasifier; step 2: when the temperature rise reaches an extent at which coal water slurry to be injected can be ignited, stopping injecting the fuel and the first pressurized oxygen-containing gas; and injecting the coal water slurry to be injected and a second pressurized oxygen-containing gas into the gasifier for gasification of the coal water slurry; and step 3: after the gasification of the coal water slurry is stable, injecting a third second pressurized oxygen-containing gas and a pressurized carbon dioxide gas carrying pulverized coal into the gasifier for co-gasification.

With regard to the same pressurized oxygen-containing gas, when the "time to start injection" is different, the gas is differentiated by "the first pressurized oxygen-containing gas, the second pressurized oxygen-containing gas and the third pressurized oxygen-containing gas". In other words, the first pressurized oxygen-containing gas, the second pressurized oxygen-containing gas and the third pressurized oxygen-containing gas are the same pressurized oxygen-containing gas. The words "first, second and third" are merely used to define that the three pressurized oxygen-containing gases have different "time to start injection", instead of defining the pressure or the respective parameter composition thereof. Injection positions of the first pressurized oxygen-containing gas, the second pressurized oxygen-containing gas and the third pressurized oxygen-containing gas can be preferably different, and same or different injection devices can be used at the same injection position.

According to the present invention, in the step 2, an oxygen-coal ratio of the injected second pressurized oxygen-containing gas to the coal water slurry to be injected is within a range from 0.54 Nm³/kg to 0.70 Nm³/kg.

According to the present invention, in the step 3, an oxygen-coal ratio of the injected third pressurized oxygen-containing gas to the pulverized coal is within a range from 0.49 Nm³/kg to 0.65 Nm³/kg.

The oxygen-coal ratio is a ratio of the volume of oxygen to the mass of coal passing an effective cross-section in unit time, i.e., a ratio of a volume flow of oxygen to a mass flow of coal, the unit being: Nm³/kg. The coal is pulverized coal carried by the pressurized carbon dioxide gas and coal in coal water slurry. The mass of the coal is the mass of the pulverized coal carried by the pressurized carbon dioxide gas or the mass of coal in coal water slurry regardless of the mass of gas or water and an annexing agent.

According to the present invention, the fuel and the first pressurized oxygen-containing gas in the step 1 are injected into the gasifier by an ignition burner provided on the top of the gasifier.

According to the present invention, the step 2 further comprises the following steps: step 2.1: when the temperature rise reaches an extent at which the coal water slurry to be injected can be ignited, stopping injecting the fuel and the first pressurized oxygen-containing gas; step 2.2: replacing the ignition burner with a pulverized coal burner, and starting a high-temperature resistant protection system for the pulverized coal burner; step 2.3: mounting a furnace-side burner on a side wall of the gasifier, and starting a high-temperature resistant protection system for the furnace-side burner; and step 2.4: injecting the coal water slurry to be injected and the second pressurized oxygen-containing gas to the gasifier by the furnace-side burner for gasification of the coal water slurry.

According to the present invention, in the step 3, the third pressurized oxygen-containing gas and the pressurized carbon dioxide gas carrying pulverized coal are injected into the gasifier by the pulverized coal burner.

According to the present invention, a mass flow of the coal water slurry to be injected is greater than or equal to 70% of a load of the furnace-side burner.

According to the present invention, when gasification of the pulverized coal of the step 2.4 is performed, a black water circulation system of the gasifier is started.

According to the present invention, the step 3 further includes the following steps: controlling, by adjusting the oxygen-coal ratio of the third pressurized oxygen-containing gas to the pulverized coal within a range from 0.49 Nm³/kg to 0.65 Nm³/kg and/or adjusting the oxygen-coal ratio of the second pressurized oxygen-containing gas to the coal water slurry to be injected within a range from 0.54 Nm³/kg to 0.70 Nm³/kg, an operating temperature of the gasifier.

According to the present invention, in the gasifier with water wall, the operating temperature of the gasifier is controlled within a range from 1400°C to 1600°C; and in the firebrick gasifier, the operating temperature of the gasifier is controlled within a range from 1300°C to 1400°C.

According to the present invention, the step 3 further includes the following steps: controlling, by increasing or decreasing a volume flow of oxygen in the third pressurized oxygen-containing gas, a mass flow of the pulverized coal, a volume flow of oxygen in the second pressurized oxygen-containing gas and a mass flow of coal in the coal water slurry to be injected in an equal proportion, an operating pressure of the gasifier.

According to the present invention, in the gasifier with water wall, the operating pressure of the gasifier is controlled within a range from 4.5 MPa to 7.0 MPa; and in the firebrick gasifier, the operating pressure of the gasifier is controlled within a range from 4.5 MPa to 7.0 MPa.

According to the present invention, in the step 1, by adjusting injection flows of the fuel and the first pressurized oxygen-containing gas, speed of the temperature rise is controlled to be lower than or equal to 50 °C/h.

According to the present invention, a temperature at which the coal water slurry to be injected can be ignited is greater than or equal to 1000°C.

According to the present invention, in the step 1, the first pressurized oxygen-containing gas and the fuel are injected into the gasifier by isolated passages of the ignition burner; and in the step 3, the third pressurized oxygen-containing gas and the pressurized carbon dioxide gas carrying pulverized coal are injected into the gasifier by isolated passages of the pulverized coal burner.

According to the present invention, the fuel is fuel oil or fuel gas, the first pressurized oxygen-containing gas, the second pressurized oxygen-containing gas and the third pressurized oxygen-containing gas are all pressurized oxygen, wherein when the fuel is fuel oil, the fuel oil, after being atomized, is injected into the gasifier.

When compared with the existing technologies, the present invention has the following advantageous effects.

With regard to the method for co-gasification of coal of the present invention, first, fuel and the first pressurized oxygen-containing gas are injected into the gasifier and the fuel is ignited for a temperature rise inside the gasifier. Then, when the temperature rise reaches an extent at which coal water slurry to be injected can be ignited, the injection of the fuel and the first pressurized oxygen-containing gas is stopped, and the coal water slurry and the second pressurized oxygen-containing gas are injected into the gasifier for gasification of the coal water slurry. That is, the coal water slurry is gasified in the gasifier. After the gasification of the coal water slurry is stable, the pulverized coal and the third pressurized oxygen-containing gas are injected into the gasifier for co-gasification. That is, now, gasification of pulverized coal and gasification of coal water slurry are performed in the gasifier simultaneously. Thus, co-gasification of coal is formed. By the method for co-gasification of coal, co-gasification is established after ensuring that gasification of the coal water slurry is stable, thus ensuring a stable operation during co-gasification, without adjustment steps in the prior art which are complicated, time-consuming and highly difficult.

### Brief Description of the Drawings

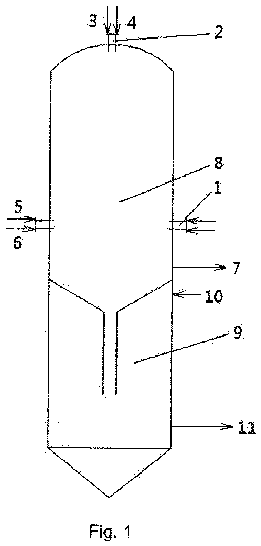

Fig. 1 is a schematic view of one Embodiment of a method for co-gasification of coal according to the present invention, when in application.

### Detailed Description of the Preferred Embodiments

The specific implementations of the present invention will be described with reference to the accompanying drawings.

With reference to Fig. 1, a gasifier applied in one embodiment of the method for co-gasification of coal of the present invention is shown. Wherein, in this embodiment, a lining of the gasifier is a water-cooled wall. A furnace-side burner 1 is provided on a side wall of the gasifier, and a furnace-top burner 2 is provided on the top of the gasification burner. A first injection pipe 3 and a first pipeline 4 are communicated with the furnace-top burner 2, and a second injection pipe 5 and a second pipeline 6 are communicated with the furnace-side burner 1. It can be understood that, in this embodiment, as for the furnace-top burner 2, the positions of an ignition burner and a pulverized coal burner are shown. Of course, in other optional embodiments, the positions thereof may be different. In addition, in this embodiment, the gasifier has a first chamber 8 and a second chamber 9 communicated with the first chamber 8; the first chamber 8 is closer to the top of the gasifier than the second chamber 9, and the furnace-side burner 1 is provided on a side wall of the first chamber 8 of the gasifier to be communicated with the first chamber 8. When co-gasification of coal is performed by using this gasifier, co-gasification of coal is performed in the first chamber 8. Gas generated during the gasification process is exhausted by a third pipeline 7 on a side wall of the first chamber 8 of the gasifier, and coal ash generated during gasification enters into the second chamber 9. In this embodiment, a fourth pipeline 10 and a fifth pipeline 11 are provided on and communicated with a side wall of the second chamber 9. Both one end of the fourth pipeline 10 and one end of the fifth pipeline 11 are communicated with the interior of the second chamber 9, and both of the other end of the fourth pipeline 10 and the other end of the fifth pipeline 11 are communicated with a black water circulation system.

With reference to Fig. 1 again, the application of the method for co-gasification of coal of the present invention to the gasifier includes the following steps: step 1: injecting fuel and a first pressurized oxygen-containing gas into a gasifier, and igniting the fuel for temperature rise inside the gasifier; step 2: when the temperature rise reaches an extent at which coal water slurry to be injected can be ignited, stopping injecting the fuel and the first pressurized oxygen-containing gas; and injecting the coal water slurry to be injected and a second pressurized oxygen-containing gas into the gasifier for gasification of the coal water slurry; and step 3: after the gasification of the coal water slurry is stable, injecting a third pressurized oxygen-containing gas and a pressurized carbon dioxide gas carrying pulverized coal into the gasifier for co-gasification.

By the method for co-gasification of coal, stable gasification of the coal water slurry is established in the gasifier and then co-gasification is performed, thus ensuring a stable operation of the gasifier during co-gasification, without adjustment steps in the prior art which are complicated, time-consuming and highly difficult.

With further reference to Fig. 1, in this embodiment, the step 1 is specifically implemented as follows.

An ignition burner is provided on the top of the gasifier. In this embodiment, structurally, the ignition burner includes a second passage located in the center of the ignition burner, an ignition device (an ignition match) provided at the front end of the second passage, an annular first passage provided on the outer side of the second passage. Optionally, a cooling jacket is provided between the second passage and the first passage. A cooling jacket or coil is provided outerside the first passage. The cooling jacket includes an inner layer and an outer layer, and usually, a cooling medium enters from the inner layer and is discharged from the outer layer. All the cooling jackets and/or coils are high-temperature resistant protection systems. The first injection pipe 3 is communicated with the first passage, and the first pipeline 4 is communicated with the second passage. Both the first pressurized oxygen-containing gas and the fuel are injected by the ignition burner. That is, the first pressurized oxygen-containing gas is injected into the gasifier via the first injection pipe 3 and the first passage, and the fuel is injected into the gasifier via the first pipeline 4 and the second passage. Thus, the first pressurized oxygen-containing gas and the fuel are injected into the gasifier by isolated passages of the ignition burner, that is, the first pressurized oxygen-containing gas and the fuel are not mixed in the ignition burner. It can be understood that, a plurality of isolated passages may be provided, and some of the passages are selected to inject pulverized coal and some of the passages are selected to inject the first pressurized oxygen-containing gas. In addition, the ignition burner and the furnace body of the gasifier are connected by a flange.

Ignited by an ignition device, the fuel is combusted in the gasifier to cause temperature rise in the gasifier. In this embodiment, the first pressurized oxygen-containing gas is pressurized oxygen, and the pressure of the pressurized oxygen is within a range from 6.5 MPa to 7.5 MPa; and the fuel is liquefied petroleum gas. Of course, the first pressurized oxygen-containing gas may be other pressurized gases containing oxygen, for example, a pressurized gas mixed by vapor and oxygen or a pressurized gas mixed by carbon dioxide gas and oxygen, wherein, "pressurized" means being greater than the pressure of a corresponding gas in an ordinary pressure state. The fuel may be fuel oil or fuel gas well-known to those skilled in the art. In addition, the fuel oil enters the gasifier via the ignition burner after being atomized therein.

In addition, during the temperature rise in the step 1, by adjusting injection flows of the fuel and the first pressurized oxygen-containing gas, speed of the temperature rise is controlled to be lower than or equal to 50°C/h. It can be understood that when the speed of the temperature rise is greater than 50°C/h, injection flows of the fuel and the first pressurized oxygen-containing gas are reduced to reduce the fuel combusted in the gasifier in unit time. In this way, heat release of the fuel burning in unit time is reduced, and further, the speed of the temperature rise in the gasifier is slowed down. Wherein, the injection flows of the first pressurized oxygen-containing gas and the fuel are optionally respective volume flows when the first pressurized oxygen-containing gas and the fuel are injected. Of course, according to difference in fuel used in actual production, a mass flow or a volume flow can be selected for operation.

In addition, during the temperature rise for the gasifier, smoke generated when the fuel is combusted in the gasifier is exhausted to a flare system via the third pipeline 7. Wherein, the flare system used in the present invention is a flare system well-known to those skilled in the art. The flare system is an important facility for safety and environment protection for a chemical plant, and is mainly used to process combustible gas which cannot be recycled when a production device is in an ON and OFF state and when in a non-normal production state and an emergency state.

In this embodiment, the step 2 is specifically implemented as follows.

The following step 2.1 is performed: when the temperature rise of the gasifier reaches an extent at which the coal water slurry to be injected can be ignited (in this embodiment, the temperature at which the coal water slurry can be ignited is greater than or equal to 1000°C), injection of the fuel and the first pressurized oxygen-containing gas is stopped. It can be understood by those skilled in the art that, according to the property of the coal water slurry used, the temperature at which the coal water slurry can be ignited can be determined within a temperature range greater than or equal to 1000°C. It can also be understood that the purpose of a temperature rise in the gasifier is to increase the temperature inside the gasifier to a temperature at which the coal water slurry to be injected can be combusted, i.e., to an extent at which the coal water slurry to be injected can be combusted without increasing the temperature to an extremely high extent.

The following step 2.2 is performed once injection of the fuel and the first pressurized oxygen-containing gas is stopped. The ignition burner is replaced with the pulverized coal burner, and the high-temperature resistant protection system of the pulverized coal burner is started. Optionally, the high-temperature resistant protection system for the pulverized coal burner is a pipeline wound on the outer wall of the burner, and the temperature of the burner is decreased by heat exchange between a fluid flowing through the pipeline and the burner. Thus, the normal operation of the burner can be ensured when a high temperature (greater than or equal to 1000°C) occurs during gasification and co-gasification of the coal water slurry in the gasifier. Of course, other devices well-known to those skilled in the art may be used to protect the burner. In this embodiment, structurally, the pulverized coal burner is typically formed of a plurality of concentric tubes. The center is a central oxygen passage, the outer annulus of the central oxygen passage is a pulverized coal passage, and an annulus oxygen passage is outside the pulverized coal passage. Optionally, a cooling jacket is provided between the pulverized coal passage and the annulus oxygen passage. A cooling jacket is provided outside the annulus oxygen passage. The cooling jacket includes an inner layer and an outer layer, and usually, a cooling medium enters from the inner layer and is discharged from the outer layer. The two cooling jackets are the high-temperature resistant protection systems. In addition, the pulverized coal burner and the furnace body of the gasifier are connected by a flange.

Here, by respectively providing an ignition burner and a pulverized coal burner, the following defect is overcome: a combined burner is unable to withstand a high temperature (1000°C) and is easily damaged; furthermore, the combined burner is complicated in structure and relatively high in cost. The respective application of an ignition burner and a pulverized coal burner can reduce the production cost. The following step 2.3 is performed after replacing the ignition burner with the pulverized coal burner. A furnace-side burner is mounted on a side wall of the gasifier, and a high-temperature resistant protection system for the furnace-side burner is started. This high-temperature resistant protection system is the same as the high-temperature resistant protection system for the pulverized coal burner, and will not be repeated here.

Wherein, the furnace-side burner is structurally a coal water slurry burner structure, formed of a series of concentric tube nozzles. An inner nozzle thereof is a central oxygen flow passage. An annulus passage formed by the outer wall of the inner nozzle and the inner wall of an intermediate nozzle is a flow passage for coal water slurry. An end of the inner nozzle and an end of the intermediate nozzle are separated by a certain distance to form a premixing chamber so that oxygen and coal water slurry can be mixed therein. An annulus passage formed by the outer wall of the intermediate nozzle and the inner wall of the outer nozzle is an outer oxygen flow passage. An end of the intermediate nozzle and an end of the outer nozzle are substantially flush with each other. There is a water cooling coil on the outer surface of the outer nozzle to lower the temperature of the whole burner. The second injection pipe 5 is communicated with the central oxygen flow passage and the outer oxygen flow passage. The second pipeline 6 is communicated with the coal water slurry flow passage. The coal water slurry is injected into the coal water slurry flow passage through the second pipeline 6. The foregoing structure can refer to the structure disclosed in CN103013574A of the prior art, but is not limited thereto. In other optional embodiments, there may be only one passage for injecting the second pressurized oxygen-containing gas and one passage for injecting the coal water slurry. In addition, the furnace-side burner and the furnace body of the gasifier are fixed by a flange.

Then, the following step 2.4 is performed. That is, the coal water slurry to be injected and the second pressurized oxygen-containing gas are injected into the gasifier via the furnace-side burner for gasification of the coal water slurry. Specifically, in this embodiment, the second pressurized oxygen-containing gas is injected into the coal water slurry burner via the second injection pipe 5, and the coal water slurry is injected into the coal water slurry burner via the second pipeline 6. Thus, the second pressurized oxygen-containing gas and the coal water slurry are injected into the gasifier by the coal water slurry burner for gasification of the coal water slurry. Wherein, the coal water slurry which is to be injected into the gasifier is regarded as coal water slurry to be injected. If the "coal water slurry" mentioned in the present invention has not been injected into the gasifier and will be injected into the gasifier in the following steps, the "coal water slurry" mentioned is "coal water slurry to be injected".

In addition, when the injection of the coal water slurry and the second pressurized oxygen-containing gas is started, the oxygen-coal ratio of the second pressurized oxygen-containing gas to the coal water slurry is within a range from 0.54 Nm³/kg to 0.70 Nm³/kg. In other words, after the furnace-side burner 1 is mounted, the simultaneous injection of the coal water slurry and the second pressurized oxygen-containing gas is started. The ratio of the volume flow (volume unit: Nm³) of the oxygen in the second pressurized oxygen-containing gas to the mass flow (mass unit: kg) of the coal in the coal water slurry, which are injected simultaneously, is within the range from 0.54 Nm³/kg to 0.70 Nm³/kg. In this embodiment, the second pressurized oxygen-containing gas and the first second pressurized oxygen-containing gas are the same pressurized oxygen-containing gas, i.e., pressurized oxygen. Hence, the volume flow of the oxygen in the second pressurized oxygen-containing gas is the volume flow of the pressurized oxygen. Of course, in other optional embodiments, for example, when the second pressurized oxygen-containing gas is a pressurized gas mixed by vapor and pure oxygen, the volume flow of the oxygen in the second pressurized oxygen-containing gas is the volume flow of the oxygen in the pressurized mixed gas.

In addition, during the injection of the coal water slurry, the mass flow of the coal water slurry is ensured to be greater than or equal to 70% of the load of the furnace-side burner 1. Wherein, the load of the furnace-side burner 1 is an optimal flow value of a liquid flowing through the burner, and the optimal flow value is already known when a burner leaves the factory.

By the steps of the step 2, a coal water slurry gasification reaction of the coal water slurry takes place inside the gasifier. Optionally, when the gasification reaction of the coal water slurry starts to take place inside the gasifier, a black water circulation system is started. Specifically, during the gasification of the coal water slurry in the first chamber 8, gasified coal ash enters the second chamber 9. Water is transported from the fourth pipeline 10 to the interior of the second chamber 9. The water transported to the interior of the second chamber 9 is mixed with coal ash (that is, "black water" is formed), and the water containing coal ash is discharged via the fifth pipeline 11. In this way, coal ash in the second chamber 9 is discharged. When the water containing coal ash discharged from the fifth pipeline 11 passes through the black water circulation system, the coal ash is removed by filtration and the water is reused. In addition, during the gasification of the coal water slurry, the generated synthesis gas is exhausted by the third pipeline 7. In addition, it is detected whether the exhausted synthesis gas is qualified. If the exhausted synthesis gas is qualified, the synthesis gas is transported to a purification procedure downstream; and if the exhausted synthesis gas is not qualified, the synthesis gas is guided to the flare system. For example, with the difference in pressure between the interior of the gasifier and the exterior of the gasifier, the synthesis gas is pumped out. Of course, according to different requirements on actual production, there may be slight difference in standards for deciding whether the exhausted synthesis gas is qualified. Those skilled in the art can detect and decide whether the synthesis gas is qualified according to requirements on actual production.

Optionally, during the gasification of the coal water slurry, by adjusting the oxygen-coal ratio of the second pressurized oxygen-containing gas to the coal water slurry within a range from 0.54 Nm³/kg to 0.70 Nm³/kg, components of the synthesis gas generated by gasification of coal and an operating temperature inside the gasifier are adjusted. Meanwhile, in a case where the oxygen-coal ratio is maintained to be constant, by adjusting the volume flow of the second pressurized oxygen-containing gas and the mass flow of the coal in the coal water slurry, the operating pressure inside the gasifier is adjusted, so that gasification of the coal water slurry is becoming stable. Wherein, the method for adjusting the volume flow of the first pressurized oxygen-containing gas and the mass flow of the coal in the coal water slurry will be described in detail below.

In addition, during the actual production, a standard for deciding whether the gasification of the coal water slurry is stable varies according to different requirements on actual production. Those skilled in the art can decide whether gasification of the pulverized coal is stable or not according to requirements on actual production. For example, components of the synthesis gas exhausted from the third pipeline 7 are detected. If the effective components (CO, H₂, CH₄) of the synthesis gas are stable, or if the content of one (CO or H₂) or some components (CO, H₂ and CH₄) meets the requirement, the gasification of the coal water slurry is stable. Optionally, when the total volume content by percentage of hydrogen, carbon oxide and methane in the synthesis gas (i.e., percentage of the total volume of the three components to the volume of the generated synthesis gas) varies within the range from 75% to 95%, or when the fluctuation range of the volume content by percentage of hydrogen, carbon oxide or methane in the synthesis gas (i.e., the percentage of the three components respectively to the volume of the synthesis gas) is less than 20%, the effective components (CO, H₂, CH₄) of the synthesis gas are stable. That is, the gasification of the coal water slurry is stable. In addition, optionally, if the volume content of H₂ (i.e., percentage of the volume of H₂ to the volume of the synthesis gas) is greater than or equal to 30%, and/or if the volume content of CO (i.e., percentage of the volume of CO to the volume of the synthesis gas) is greater than or equal to 40%, the content of one component (CO or H₂) or some components (CO and H₂) in the synthesis gas meets the requirement. That is, gasification of the coal water slurry is stable. Of course, the foregoing description is merely an embodiment, numerical values therein can be set according to specific requirements on production, and the present invention is not limited thereto.

In this embodiment, the step 3 is specifically implemented as follows.

After the gasification of the coal water slurry is stable, the third pressurized oxygen-containing gas and the pressurized carbon dioxide carrying pulverized coal are injected into the gasifier by a pulverized coal burner provided on the top of the gasifier. Wherein, the first injection pipe 3 is communicated with the oxygen passage which is located in the center and the annulus oxygen passage of the pulverized coal burner, and the first pipeline 4 is communicated with the pulverized coal passage of the pulverized coal burner. The third pressurized oxygen-containing gas is injected into the gasifier via the first injection pipe 3 and the oxygen passage which is located in the center and the annulus oxygen passage, and the pressurized carbon dioxide carrying pulverized coal is injected into the gasifier via the first pipeline 4 and the pulverized coal passage. Thus, the third pressurized oxygen-containing gas and the pressurized carbon dioxide carrying pulverized coal are injected into the gasifier by isolated passages of the pulverized coal burner. That is, the third pressurized oxygen-containing gas and the pressurized carbon dioxide carrying pulverized coal, before entering the gasifier, are not mixed. Wherein, the pressure of the pressurized carbon dioxide gas is greater than 6 MPa. It can be understood that, the first injection pipe 3 and the first pipeline 4 which are communicated with the pulverized coal burner may be the same as or different from the first injection pipe 3 and the first pipeline 4 which are communicated with the ignition burner. The same names are used merely for ease of description.

Further, when the injection of the third pressurized oxygen-containing gas and the pressurized carbon dioxide carrying pulverized coal is started, the oxygen-coal ratio of the third pressurized oxygen-containing gas to the pulverized coal is within a range from 0.49 Nm³/kg to 0.65 Nm³/kg. That is, when the pressurized carbon dioxide carrying pulverized coal is injected, a ratio of the volume flow (volume unit: Nm³) of the oxygen in the third pressurized oxygen-containing gas to the mass flow (mass unit: kg) of the pulverized coal which is injected simultaneously is within a range from 0.49 Nm³/kg to 0.65 Nm³/kg. In this embodiment, the third pressurized oxygen-containing gas is the same pressurized oxygen-containing gas as the first pressurized oxygen-containing gas and the second pressurized oxygen-containing gas, i.e., they are pressurized oxygen.

Here, the pulverized coal and the coal water slurry are co-gasified in the gasifier via the oxygen supply by the second pressurized oxygen-containing gas and the third pressurized oxygen-containing gas and the reaction with the pressurized carbon dioxide, to generate a synthesis gas mainly composed of carbon oxide and hydrogen. The synthesis gas is exhausted by the third pipeline 7.

In the preferred embodiments of the present invention, with regard to the same pressurized oxygen-containing gas, when the "time to start injection" is different, the gas is differentiated by "the first pressurized oxygen-containing gas, the second pressurized oxygen-containing gas and the third pressurized oxygen-containing gas". In other words, the first pressurized oxygen-containing gas, the second pressurized oxygen-containing gas and the third pressurized oxygen-containing gas are the same pressurized oxygen-containing gas. The words "first, second and third" are merely used to define that the three pressurized oxygen-containing gases have different "time to start injection", instead of defining the pressure or the respective parameter composition thereof. Injection positions of first pressurized oxygen-containing gas, the second pressurized oxygen-containing gas and the third pressurized oxygen-containing gas can be preferably different, and same or different injection devices can be used at the same injection position.

In the foregoing co-gasification process, an operating temperature of the gasifier is controlled within a range from 1400°C to 1600°C by adjusting the oxygen-coal ratio of the third pressurized oxygen-containing gas to the pulverized coal within a range from 0.49 Nm³/kg to 0.65 Nm³/kg and/or by adjusting the oxygen-coal ratio of the second pressurized oxygen-containing gas to the coal water slurry within a range from 0.54 Nm³/kg to 0.70 Nm³/kg.

Specifically, if the operating temperature of the gasifier (i.e., the temperature inside the first chamber 8 of the gasifier) is lower than 1400°C, combustion of the pulverized coal and the coal water slurry inside the gasifier is facilitated by increasing the oxygen-coal ratio of the third pressurized oxygen-containing gas to the pulverized coal (for example, increasing the volume flow of the oxygen in the third pressurized oxygen-containing gas and/or decreasing the mass flow of the pulverized coal) and/or by increasing oxygen-coal ratio of the second pressurized oxygen-containing gas to the coal water slurry (for example, increasing the volume flow of the oxygen in the second pressurized oxygen-containing gas and/or decreasing the mass flow of the coal in the coal water slurry). In this way, the operating temperature of the gasifier is increased.

If the operating temperature of the gasifier is greater than 1600°C, combustion of the pulverized coal and the coal water slurry inside the gasifier is weakened by decreasing the oxygen-coal ratio of the third pressurized oxygen-containing gas to the pulverized coal (for example, decreasing the volume flow of the oxygen in the third pressurized oxygen-containing gas and/or increasing the mass flow of the pulverized coal) and/or by decreasing the oxygen-coal ratio of the second pressurized oxygen-containing gas to the coal water slurry (for example, decreasing the volume flow of the oxygen in the second pressurized oxygen-containing gas and/or increasing the mass flow of the coal in the coal water slurry). In addition, the water phase in the coal water slurry plays a role of decreasing the temperature, and the operating temperature of the gasifier is thus decreased.

In addition, the step 3 of this embodiment also includes a following step: adjusting the operating pressure of the gasifier. In addition, preferably, the operating pressure of the gasifier is controlled within a range from 4.5 MPa to 7.0 MPa.

An operating pressure of the gasifier is controlled by increasing or decreasing a volume flow of oxygen in the third pressurized oxygen-containing gas, a mass flow of the pulverized coal, a volume flow of oxygen in the second pressurized oxygen-containing gas and a mass flow of coal in the coal water slurry in an equal proportion.

Wherein, it can be understood that there are at least three methods for changing the volume flows of the oxygen in the third pressurized oxygen-containing gas and the second pressurized oxygen-containing gas. The first method is that the volume flow of the pressurized oxygen-containing gas is maintained to be constant while the volume flow of oxygen therein is changed so as to change the volume flow of the oxygen. The second method is that the volume flow of the oxygen in the pressurized oxygen-containing gas is maintained unchanged while the volume flow of the pressurized oxygen-containing gas is changed so as to change the volume flow of the oxygen. The third method is a combination of the former two methods. Similarly, there are at least three methods for changing the mass flow of the pulverized coal. The first method is that the volume flow of the pressurized carbon dioxide gas carrying the pulverized coal is maintained to be constant while the content of the pulverized coal therein (mass of the pulverized coal carried in a unit volume of pressurized carbon dioxide gas) is changed so as to change the mass flow of the pulverized coal which is injected into the gasifier. The second method is that the content of the pulverized coal in the pressurized carbon dioxide gas is maintained unchanged while the volume flow of the pressurized carbon dioxide injected into the gasifier is changed so as to change the mass flow of the pulverized coal. The third method is a combination of the former two methods. Of course, there are at least three methods for changing the mass flow of the coal in the coal water slurry. The first method is that the volume flow of the coal water slurry is maintained to be constant while the content of the coal therein (mass of the coal carried in a unit volume of coal water slurry) is changed so as to change the mass flow of the coal injected into the gasifier. The second method is that the content of coal in the coal water slurry is maintained unchanged while the volume flow of the coal water slurry injected into the gasifier is changed so as to change the mass flow of the coal. The third method is a combination of the former two methods. Any one of the methods may be selected for adjustment, as long as the volume flow of the oxygen in the third pressurized oxygen-containing gas, the mass flow of the pulverized coal, the volume flow of the oxygen in the second pressurized oxygen-containing gas and the mass flow of the coal in the coal water slurry, which are injected into the gasifier simultaneously, are increased or decreased in an equal proportion. The adjustment methods described above are also applicable to adjustment of the operating temperature and operating pressure during the gasification of the coal water slurry, and to the steps of adjusting the operating temperature of the gasifier in the step 3.

In this embodiment, when the operating pressure of the gasifier (the pressure inside the first chamber 8) is lower than 4.5 MPa, both the volume flow of the oxygen in the third pressurized oxygen-containing gas and the mass flow of the pulverized coal are increased, and it is ensured that the ratio of the volume flow of the oxygen in the first pressurized oxygen-containing gas to the mass flow of the pulverized coal (i.e., the oxygen-coal ratio) is constant during and after the increase. Meanwhile, both the volume flow of the oxygen in the second pressurized oxygen-containing gas and the mass flow of the coal in the coal water slurry are increased. For example, both the volume flow of the oxygen in the third pressurized oxygen-containing gas and the mass flow of the pulverized coal, which are injected by the pulverized coal burner, are increased by 5%, and both the volume flow of the oxygen in the second pressurized oxygen-containing gas and the mass flow of the coal in the coal water slurry, which are injected by the furnace-side burner, are also increased by 5%, so that the amount of raw material entering the gasifier for gasification in unit time is increased and the amount of the synthesis gas is increased. In this way, the operating pressure of the gasifier is increased. Optionally, the operating pressure of the gasifier may also be increased by reducing the amount of gas passing through the third pipeline 7. If the operating pressure of the gasifier is greater than 7.0 MPa, the injection amount of the oxygen and coal at each burner is decreased in an equal proportion. For example, both the volume flow of the oxygen in the third pressurized oxygen-containing gas and the mass flow of the pulverized coal, which are injected by the pulverized coal burner, are decreased by 5%, and both the volume flow of the oxygen in the second pressurized oxygen-containing gas and the mass flow of the coal in the coal water slurry, which are injected by the furnace-side burner, are also decreased by 5%, so that the amount of raw material entering the gasifier for gasification in unit time is decreased and the amount of the synthesis gas is decreased; or, by increasing the amount of gas passing through the third pipeline 7, thus, the operating pressure of the gasifier is decreased.

It can be understood that, in the above embodiments, in a case where the content of oxygen in a unit volume of second pressurized oxygen-containing gas and the content of the oxygen in a unit volume of third pressurized oxygen-containing gas are maintained unchanged, the volume flows of the oxygen in the second pressurized oxygen-containing gas and the third pressurized oxygen-containing gas may be increased by increasing the volume flows of the second pressurized oxygen-containing gas and the third pressurized oxygen-containing gas, and vice versa. However, when the mass content of the pulverized coal in a unit volume of pressurized carbon dioxide carrying pulverized coal is maintained unchanged, the mass flow of the pulverized coal may be decreased by decreasing the volume flow of the pressurized carbon dioxide carrying the pulverized coal, and vice versa. In a case where the mass content of the coal in a unit volume of coal water slurry is maintained unchanged, the mass flow of the coal in the coal water slurry may be increased by increasing the volume flow of the coal water slurry, and vice versa. Of course, those skilled in the art can control the pressure and temperature simultaneously.

Further, in this embodiment, the pulverized coal is injected by carrying it in the pressurized carbon dioxide. On one hand, the participation of carbon dioxide in the co-gasification reaction can increase the content of the effective components of the synthesis gas. On the other hand, the presence of a foreign gas in the synthesis gas is avoided for fear that the following processes might be complicated.

In addition, positions of the ignition burner, the pulverized coal burner and the furnace-side burner 1 are not limited to the forgoing embodiments. They can be located at any positions of the gasifier as long as the establishment of co-gasification in the gasifier is not influenced. In this embodiment, fuel can be ignited by automatic ignition of the ignition burner (igniting the combustible gas by supplying a high pressure by an electrode) or by manual ignition (igniting the combustible gas by naked fire). Of course, the way is not limited thereto. Instead, the first pressurized oxygen-containing gas and fuel may be introduced by a nozzle provided on the top of the gasifier, and the fuel in the gasifier may be ignited in other methods well-known to those skilled in the art. In addition, the fuel and the first pressurized oxygen-containing gas can be injected by different devices, and the pulverized coal and the third pressurized oxygen-containing gas can be injected by different devices, not merely limited to by the same burner or nozzle. Also, the coal water slurry and the second pressurized oxygen-containing gas can be injected by a nozzle different from the burner in this embodiment. In addition, the coal water slurry and the second pressurized oxygen-containing gas can be injected by different devices, not merely limited to by the same burner or nozzle.

In the second embodiment of the co-gasification of coal of the present invention, a lining of the gasifier is made of firebricks. In the step 3, an operating temperature of the gasifier is controlled within a range from 1300□ to 1400□ by adjusting the oxygen-coal ratio of the third pressurized oxygen-containing gas to the pulverized coal within a range from 0.49 Nm³/kg to 0.65 Nm³/kg and/or by adjusting the oxygen-coal ratio of the second pressurized oxygen-containing gas to the coal water slurry within a range from 0.54 Nm³/kg to 0.70 Nm³/kg. In addition, the operating pressure of the gasifier is controlled within a range from 4.5 MPa to 7.0 MPa (the method is the same as that in the first embodiment). The remaining steps are the same as those in the first embodiment, and will not be repeated here.

Of course, the present invention is not limited to the above embodiments. The positions for injecting the pulverized coal and the first pressurized oxygen-containing gas which are used for temperature rise inside the gasifier, the coal water slurry and the second pressurized oxygen-containing gas which are used for gasification of the coal water slurry, and the third pressurized oxygen-containing gas and the pressurized carbon dioxide carrying pulverized coal which are used for gasification of the pulverized coal may be any positions located on the first chamber of the gasifier, and those may be injected by devices such as nozzles or burners well-known to those skilled in the art. In addition, a plurality of pulverized coal burners and furnace-side burners can be provided, and each of the volume flow and the mass flow mentioned above is a sum of the volume flow or the mass flow of corresponding matters entering by each burner. For example, when two furnace-side burners are provided, the volume flow of oxygen in the second pressurized oxygen-containing gas is a sum of volume flows of oxygen in the second pressurized oxygen-containing gas entering by the two furnace-side burners.

In conclusion, the steps disclosed by the present invention facilitate control on the temperature and pressure of the gasifier, with simple operational process, stable operation, quick production and high safety.

The foregoing descriptions are merely preferred embodiments of the present invention, and not intended to limit the present invention. For those skilled in the art, various modifications and changes may be made to the present invention. Any modifications, equivalent replacements, improvements and the like made within the spirit and principle of the present invention shall be included in the protection scope of the present invention.

## Claims

1. A method for co-gasification of coal, comprising the following steps:
step 1: injecting fuel and a first pressurized oxygen-containing gas into a gasifier, and igniting the fuel for temperature rise inside the gasifier;
step 2: when the temperature rise reaches an extent at which coal water slurry to be injected can be ignited, stopping injecting the fuel and the first pressurized oxygen-containing gas; and injecting the coal water slurry to be injected and a second pressurized oxygen-containing gas into the gasifier for gasification of the coal water slurry; and
step 3: after the gasification of the coal water slurry is stable, injecting a third second pressurized oxygen-containing gas and a pressurized carbon dioxide gas carrying pulverized coal into the gasifier for co-gasification.

2. The method for co-gasification of coal according to claim 1, wherein,
in the step 2, an oxygen-coal ratio of the injected second pressurized oxygen-containing gas to the coal water slurry is within a range from 0.54 Nm³/kg to 0.70 Nm³/kg.

3. The method for co-gasification of coal according to claim 1, wherein,
in the step 3, an oxygen-coal ratio of the injected third pressurized oxygen-containing gas to the pulverized coal is within a range from 0.49 Nm³/kg to 0.65 Nm³/kg.

4. The method for co-gasification of coal according to claim 1, wherein,
the fuel and the first pressurized oxygen-containing gas in the step 1 are injected into the gasifier by an ignition burner provided on the top of the gasifier.

5. The method for co-gasification of coal according to claim 4, wherein,
the step 2 further comprises the following steps:
step 2.1: when the temperature rise reaches an extent at which the coal water slurry to be injected can be ignited, stopping injecting the fuel and the first pressurized oxygen-containing gas;
step 2.2: replacing the ignition burner with a pulverized coal burner, and starting a high-temperature resistant protection system for the pulverized coal burner;
step 2.3: mounting a furnace-side burner on a side wall of the gasifier, and starting a
high-temperature resistant protection system for the furnace-side burner; and
step 2.4: injecting the coal water slurry to be injected and the second pressurized oxygen-containing gas to the gasifier by the furnace-side burner for gasification of the coal water slurry.

6. The method for co-gasification of coal according to claim 5, wherein,
in the step 3, the third pressurized oxygen-containing gas and the pressurized carbon dioxide gas carrying pulverized coal are injected into the gasifier by the pulverized coal burner.

7. The method for co-gasification of coal according to claim 5, wherein,
a mass flow of the coal water slurry to be injected is greater than or equal to 70% of a load of the furnace-side burner.

8. The method for co-gasification of coal according to claim 5, wherein,
in the step 2.4, when gasification of the coal water slurry is performed, a black water circulation system of the gasifier is started.

9. The method for co-gasification of coal according to any one of claims 1 to 8, wherein,
the step 3 further comprises the following steps:
controlling, by adjusting the oxygen-coal ratio of the third pressurized oxygen-containing gas to the pulverized coal within a range from 0.49 Nm³/kg to 0.65 Nm³/kg and/or by adjusting the oxygen-coal ratio of the second pressurized oxygen-containing gas to the coal water slurry to be injected within a range from 0.54 Nm³/kg to 0.70 Nm³/kg, an operating temperature of the gasifier.

10. The method for co-gasification of coal according to claim 9, wherein,
in the gasifier with water wall, the operating temperature of the gasifier is controlled within a range from 1400°C to 1600°C; and
in the firebrick gasifier, the operating temperature of the gasifier is controlled within a range from 1300°C to 1400°C.

11. The method for co-gasification of coal according to any one of claims 1 to 8, wherein,
the step 3 further comprises the following steps:
controlling, by increasing or decreasing a volume flow of oxygen in the third pressurized oxygen-containing gas, a mass flow of the pulverized coal, a volume flow of oxygen in the second pressurized oxygen-containing gas and a mass flow of coal in the coal water slurry to be injected in an equal proportion, an operating pressure of the gasifier.

12. The method for co-gasification of coal according to claim 11, wherein,
in the gasifier with water wall, the operating pressure of the gasifier is controlled within a range from 4.5 MPa to 7.0 MPa; and
in the firebrick gasifier, the operating pressure of the gasifier is controlled within a range from 4.5 MPa to 7.0 MPa.

13. The method for co-gasification of coal according to any one of claims 1, 4, 5 and 6, wherein,
in the step 1:
by adjusting an injection flow of the fuel and the first pressurized oxygen-containing gas, speed of the temperature rise is controlled to be lower than or equal to 50 °C/h.

14. The method for co-gasification of coal according to any one of claims 1, 4, 5 and 6, wherein,
the temperature at which the coal water slurry to be injected can be ignited is greater than or equal to 1000°C.

15. The method for co-gasification of coal according to claim 6, wherein,
in the step 1, the first pressurized oxygen-containing gas and the fuel are injected into the gasifier by isolated passages of the ignition burner; and
in the step 3, the third pressurized oxygen-containing gas and the pressurized carbon dioxide gas carrying pulverized coal are injected into the gasifier by isolated passages of the pulverized coal burner.

16. The method for co-gasification of coal according to any one of claims 1, 4, 5 and 6, wherein,
the fuel is fuel oil or fuel gas, the first pressurized oxygen-containing gas, the second pressurized oxygen-containing gas and the third pressurized
oxygen-containing gas are all pressurized oxygen;
wherein when the fuel is fuel oil, the fuel oil, after being atomized, is injected into the gasifier.
